(19) **Europäisches Patentamt / European Patent Office / Office européen des brevets**

(11) **EP 1 958 048 B1**

(12) **EUROPEAN PATENT SPECIFICATION**

(45) Date of publication and mention
of the grant of the patent:
**20.02.2019 Bulletin 2019/08**

(51) Int Cl.:
*G06F 3/0488* (2013.01)     *G06F 3/0485* (2013.01)

(21) Application number: **06846397.5**

(22) Date of filing: **29.11.2006**

(86) International application number:
**PCT/US2006/061337**

(87) International publication number:
**WO 2007/067858 (14.06.2007 Gazette 2007/24)**

(54) **LIST SCROLLING IN RESPONSE TO MOVING CONTACT OVER LIST OF INDEX SYMBOLS**

LISTENSCROLLING ALS REAKTION AUF EINEN BEWEGUNGSKONTAKT IN EINER LISTE VON INDEXSYMBOLEN

DEFILEMENT DE LISTE EN REPONSE AU CONTACT MOBILE SUR DES SYMBOLES D'INDEX

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.12.2005 US 748810 P**
**23.12.2005 US 322553**

(43) Date of publication of application:
**20.08.2008 Bulletin 2008/34**

(60) Divisional application:
**09162953.5 / 2 107 447**

(73) Proprietor: **Apple Inc.**
**Cupertino CA 95014 (US)**

(72) Inventors:
• **ORDING, Bas**
**San Francisco, CA 94131 (US)**
• **FORSTALL, Scott**
**Mountain View, CA 94040 (US)**
• **CHRISTIE, Greg**
**San Jose, CA 95129 (US)**
• **LEMAY, Stephen, O.**
**San Francisco, CA 94122 (US)**
• **CHAUDHRI, Imran**
**San Francisco, CA 94102 (US)**

(74) Representative: **Barton, Russell Glen et al**
**Withers & Rogers LLP**
**4 More London Riverside**
**London SE1 2AU (GB)**

(56) References cited:
| | |
|---|---|
| EP-A2- 0 880 091 | WO-A1-00/36496 |
| WO-A2-2005/067511 | DE-U- 29 824 936 |
| DE-U- 29 824 936 | US-A- 5 563 996 |
| US-A- 5 825 355 | US-A- 5 943 052 |
| US-A1- 2002 186 252 | US-A1- 2002 186 252 |
| US-A1- 2004 100 479 | US-A1- 2005 210 403 |
| US-A1- 2005 210 403 | US-B1- 6 430 574 |

• **Palm Inc.: "Handbook for Palm (TM) Tungsten (TM) T Handhelds", , 1 January 2002 (2002-01-01), XP055467102,**
http://web.archive.org/web/20050930215746/
http://www.palm.com:80/us/support/handbook
s/tungstent/tungstent_ug.pdf **Retrieved from the Internet:**
URL:http://www.palm.com:80/us/support/hand
books/tungstent/tungstent_ug.pdf **[retrieved on 2018-04-13]**

EP 1 958 048 B1

**Description**

FIELD OF THE INVENTION

The present invention relates generally to user interfaces that include employ touch-sensitive displays, and more specifically to user interfaces having lists that may be scrolled through.

BACKGROUND

The utility, ease of use, and ultimately, popularity of many electronic devices, including portable devices such as cellular telephones, is often gated by industrial design, including the user interface. The user interface is the gateway through which users receive not only content but also responses to user actions or behaviors, including user attempts to access a device's features or tools. As such, the user interface is integral to an overall user experience.

Unfortunately, there are limitations associated with existing user interfaces, especially the user interfaces for small, handheld devices. Existing user interfaces are often complicated. For example, the user interfaces of many mobile phones require a user to traverse a complex tree structure of menus to access device features and content. In addition, existing user interfaces are often counterintuitive, requiring a user to either read instructions in a manual or to engage in frustrating trial and error attempts to locate device features or content. As a consequence, attempts to add additional functionality to such devices are often hampered by the complexity of the user interface.

One approach for providing such user interface has been suggested in the US patent publication US2005/0210403 A1 by Satanek, which discloses a graphical user interface for browsing information including zero or more elements displayed in a display window to a user. A scrollbar is positioned along the perimeter of the window and the scrollbar may have a first end and a second end and a slider located between the ends. The slider may be configured such that movement of the slider causes information in the display area to be scrolled. In one embodiment, the size of the slider is based on the size of the one more elements of information displayed in the display window. A data-line may be positioned adjacent the scrollbar and may have a plurality of tick marks. A graphical element, which may be displayed in phantom, may be used to associate the slider to the data-line. Particularly when browsing longer lists, this approach does however show the disadvantage that finding and selecting a desired information item within the list still may take relatively long. Further, operation of such user interface demands the user to very accurately touch and move the slider of the scrollbar in order to operate it properly which can become particularly difficult when the size of the slider is based on the size of the one more elements of information and may thus become relatively small if e.g.

many elements of information are contained in the list The US patent publication US2004/0100479 A1 by Nakano et al., discloses a mobile device allowing the user to scroll a list of items by performing swipe gestures on a touch screen.

The US patent publication US5563996 A by Tchao describes the navigation of contiguous note areas on a touch screen of a computer display and includes header bars on the screen that visually separate two adjacent note areas.

The US patent publication US5825355 A1 by Palmer et al. describes a desktop system for scrolling an indexed list of items by means of a vertical scrollbar and an alpha scroll bar.

There is a need therefore, for improved user interfaces for devices, and particularly for small, handheld devices.

SUMMARY

The invention is recited in the appended claims.

In some embodiments, a movement of a point of contact by a user on an index bar in a touch-sensitive display is detected. A list of items on the touch-sensitive display is scrolled in response to the movement. The index bar may correspond to an ordered index of item subsets in the list of items. The speed at which the items are scrolled may be based on the number of entries in the respective subset and the speed of movement of the point of contact.

The aforementioned methods may be performed by a portable electronic device having a touch-sensitive display, a processor, memory and one or more programs or sets of instructions stored in the memory for performing these methods. In some embodiments, the portable electronic device provides a plurality of functions, including wireless communication.

Instructions for performing the aforementioned methods may be included in a computer program product configured for execution by one or more processors.

BRIEF DESCRIPTION OF THE DRAWINGS

For a better understanding of the invention, reference should be made to the following Description of Embodiments taken in conjunction with the accompanying drawings, in which:

Figure 1 is a flow diagram illustrating an embodiment of a method of scrolling through a list.
Figure 2 is a flow diagram illustrating an embodiment of a method of scrolling through a list.
Figure 3 is a flow diagram illustrating an embodiment of a method of scrolling through a list.
Figure 4 is a flow diagram illustrating an embodiment of a method of scrolling through a list.
Figure 5 is a flow diagram illustrating an embodiment of a method of scrolling through a list.

Figure 6 is a schematic diagram of an embodiment of a user interface of a portable electronic device having a touch-sensitive display.

Figure 7A is a schematic diagram illustrating an embodiment of a user interface of a portable electronic device having a touch-sensitive display.

Figure 7B is a schematic diagram illustrating an embodiment of a user interface of a portable electronic device having a touch-sensitive display.

Figure 7C is a schematic diagram illustrating an embodiment of a user interface of a portable electronic device having a touch-sensitive display.

Figure 8 is a flow diagram illustrating an embodiment of a method of scrolling through a list.

Figure 9 is a flow diagram illustrating an embodiment of a method of scrolling through a list.

Figure 10 is a flow diagram illustrating an embodiment of a method of scrolling through a list.

Figure 11A is a schematic diagram illustrating an embodiment of a user interface of a portable electronic device having a touch-sensitive display.

Figure 11B is a schematic diagram illustrating an embodiment of a user interface of a portable electronic device having a touch-sensitive display.

Figure 11C is a schematic diagram illustrating an embodiment of a user interface of a portable electronic device having a touch-sensitive display.

Figure 11D is a schematic diagram illustrating an embodiment of a user interface of a portable electronic device having a touch-sensitive display.

Figure 11E is a schematic diagram illustrating an embodiment of a user interface of a portable electronic device having a touch-sensitive display.

Figure 12 is a block diagram illustrating an embodiment of a portable electronic device having a touch-sensitive display.

Figure 13 is a block diagram of an embodiment of a data structure for a list of items.

Like reference numerals refer to corresponding parts throughout the drawings.

DESCRIPTION OF EMBODIMENTS

Rcfcrcncc will now be made in detail to embodiments, examples of which arc illustrated in the accompanying drawings. In the following detailed description, numerous specific details are set forth in order to provide a thorough understanding of the present invention. However, it will be apparent to one of ordinary skill in the art that the present invention may be practiced without these specific details. In other instances, well-known methods, procedures, components, and circuits have not been described in detail so as not to unnecessarily obscure aspects of the embodiments.

Embodiments of a portable device having a user interface are described. The portable device may be a handheld computer, a tablet computer, a personal digital assistant, a cellular telephone and/or a combination of two or more of these items. The portable device includes a touch-sensitive display. The display may be sensitive to haptic and/or tactile contact with a user. In an exemplary embodiment, a point of contact between the touch-sensitive display and the user corresponds to one or more digits of the user. In other embodiments, the point of contact may correspond to a stylus. The touch-sensitive display may use LCD (liquid crystal display) technology, or LPD (light emitting polymer display) technology, although other display technologies may be used in other embodiments. The touch-sensitive display may furthermore include proximity sensor arrays or other elements for determining one or more points of contact with the touch-sensitive display. The touch-sensitive display is analogous to the multi-touch sensitive tablets described in the following U.S. Patents: 6,323,846 (Westerman et al.), 6,570,557 (Westerman et al.), and/or 6,677,932 (Westerman), and/or U.S. Patent Publication 2002/0015024A1 However, the touch-sensitive display displays visual output from the portable device, whereas the touch sensitive tablets do not provide visual output.

The touch-sensitive display may include a GUI with one or more windows. The one or more windows may be used to display a list of items or information items. In an exemplary embodiment, the list of items may include contact information, such as names, addresses, photographs, and/or telephone numbers, for a plurality of individuals (sometimes referred to as a user's contact list or address book). In response to a determined movement of the point of contact, the list may be scrolled. Determining movement of the point of contact may include determining speed (magnitude), velocity (magnitude and direction), and/or an acceleration (including magnitude and/or direction) of the point of contact. Scrolling through the list may be accelerated in response to an accelerated movement of the point of contact. In some embodiments, the scrolling and acceleration of the scrolling may be in accordance with a simulation of a physical device having friction, i.e., damped motion. For example, the scrolling may correspond to a simulation of a force law or equation of motion having a mass or inertial term, as well as a dissipative term. In some embodiments, the simulation may correspond to a cylinder rotating about its axis.

In some embodiments, accelerated movement of the point of contact may include an accelerated movement of the point of contact followed by a breaking of the point of contact. For example, the user may make contact with the touch-sensitive display, swipe or sweep one or more of his or her fingers along the display (i.e., move and/or accelerate the point of contact), and optionally, break the point of contact with the display, i.e., move the one or more fingers away from the display. The swipe or sweep may be along a predefined axis of the touch-sensitive display. In other embodiments, the accelerated movement of the point of contact may include a first user gesture oriented along a predefined axis of the touch-sensitive display.

Scrolling through the list of items may be further accelerated in response to a second sweeping motion of the point of contact along the predefined axis of the touch-sensitive display and/or a second user gesture oriented along the predefined axis of the touch-sensitive display. For example, the user may swipe one or more of his or her fingers along the touch-sensitive display two or more times.

The scrolling through the list of items may be stopped in accordance with the user breaking the point of contact and then establishing a substantially stationary point of contact with the touch-sensitive display for at least a pre-determined period of time. For example, after swiping one or more of his or her fingers along the touch-sensitive display and breaking the point of contact, the user may touch the display and hold the one or more fingers that are touching the display stationary (or approximately stationary) for one or more seconds, or fractions of a second.

The direction of scrolling through the list of items may be reversed in response to the scrolling intersecting a virtual boundary corresponding to a terminus of the list. The scrolling reversal may correspond to a damped motion. For example, during scrolling, a displayed portion of the list of items may appear to bounce off of a boundary of the window in the touch-sensitive display when a beginning or an end of the list of items is reached. The apparent bounce may correspond to a simulation of a viscous or elastic ball having momentum in a first direction striking an immovable and/or inelastic object, such as a wall. The subsequent motion of the ball may be damped, for example, by including a friction or dissipative term in the simulation. A parameter corresponding to the friction term in the simulation may be adjustable, allowing the ball to reach equilibrium in contact with the wall, i.e., the virtual boundary, or displaced from the wall.

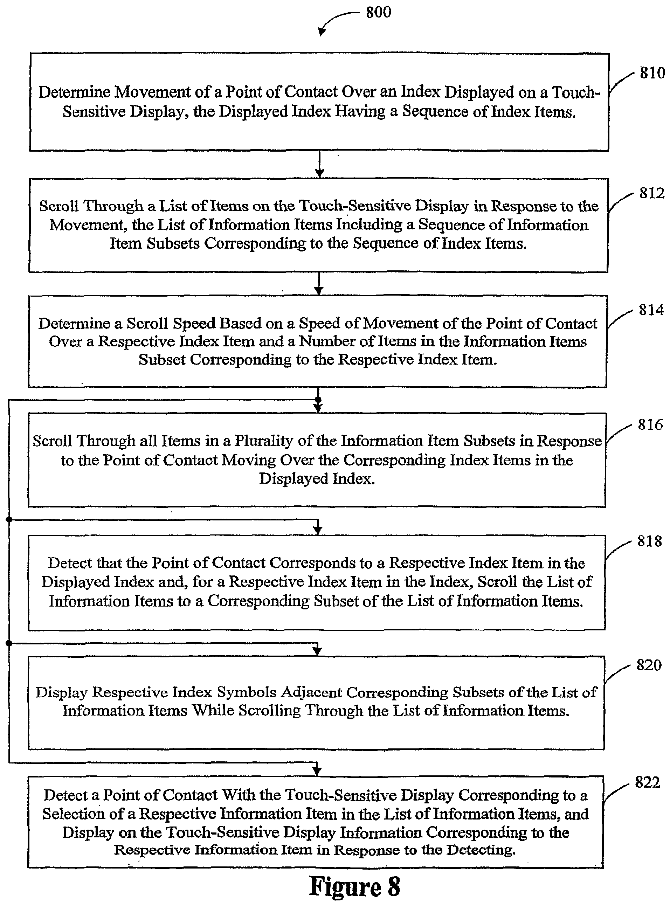

As described below with reference to Figures 8-11, in some embodiments movement of the point of contact by the user over an index on the touch-sensitive display may be determined. In some embodiments, the index may be displayed in a first region or a first window of the touch-sensitive display while the list of items or information items during the scrolling may be displayed in a second region or a second window of the touch-sensitive display. The displayed index may have a sequence of index items. In an exemplary embodiment, the sequence of index items may include letters in the alphabet, i.e., the index may include an alphabetical index. The list of information items may include an alphabetically ordered list of information items. The alphabetically ordered list of information items may include contact information, for example, in a user's contact list or address book.

In response to movement of the user's point of contact over a displayed index, the list of information items on the touch-sensitive display may be scrolled. The list of information items may include a sequence of information item subsets corresponding to the sequence of index items. The subsets may include one or more categories. For example, a respective category may include contact information for one or more individuals whose first and/or last names begin with one or more respective letters, such as the letter 's'. In an exemplary embodiment, there is a subset corresponding to each letter in the alphabet that has one or more entries. In some embodiments, the scrolling may be in accordance with a simulation of an equation of motion having friction.

The scrolling may include scrolling through a respective information item subset if the point of contact moves over a corresponding respective index item in the index items. The scrolling may have an associated scroll speed based on a speed of movement of the point of contact over the respective index item and the number of items in the information item subset corresponding to the respective index item. For example, the scroll speed may be faster for subsets that have more entries than subsets with fewer entries. The scrolling may include scrolling through all items in a plurality of the information item subsets in response to the point of contact moving over the corresponding index items in the displayed index.

If it is determined that the point of contact with the index corresponds to a respective index item in the index, the list of information items may be scrolled to a corresponding subset of the list of information items. For example, if the user selects an index item, such as the letter 'R', in the set of index symbols, the list of items may be smoothly scrolled to the corresponding subset for the letter 'R' in the list of items. Alternatively, the displayed list of information items jump directly from a current scroll position to a scroll position in which information items corresponding to the index item 'R' are displayed.

If the point of contact with the touch-sensitive display corresponds to a user selection of a respective information item in the list of information items, information corresponding to the respective information item may be displayed on the touch-sensitive display. For example, if the user selects a respective name, the corresponding contact information may be displayed.

While scrolling through respective information subsets, an index symbol may displayed in conjunction with each respective information item subset. In some embodiments, respective index symbols may be displayed adjacent to corresponding subsets (such as displayed text) of the list of information items. In some embodiments, a respective index symbol may be displayed at an upper edge of a window containing the displayed text of the respective information item subset.

The index symbol corresponding to a respective information subset may be translucently displayed over the respective information item subset. The translucently displayed index symbol may have a different font color than that used to display text in the information item subset, and/or it may be displayed using a larger font than the font used to display text in the information item subset.

If the list of information items contains no items for a particular index symbol, i.e., no entries for a particular subset, a first index symbol preceding a particular index symbol and a second index symbol following the index symbol may be displayed in conjunction with scrolling through the list of information items from the information subset corresponding to the first index symbol to the information subset corresponding to the second index symbol. The particular index symbol may not be displayed in conjunction with the displayed text of the list of information items during the scroll through. For example, display of a respective index symbol may be skipped when the list of information items contains no items for the particular index symbol.

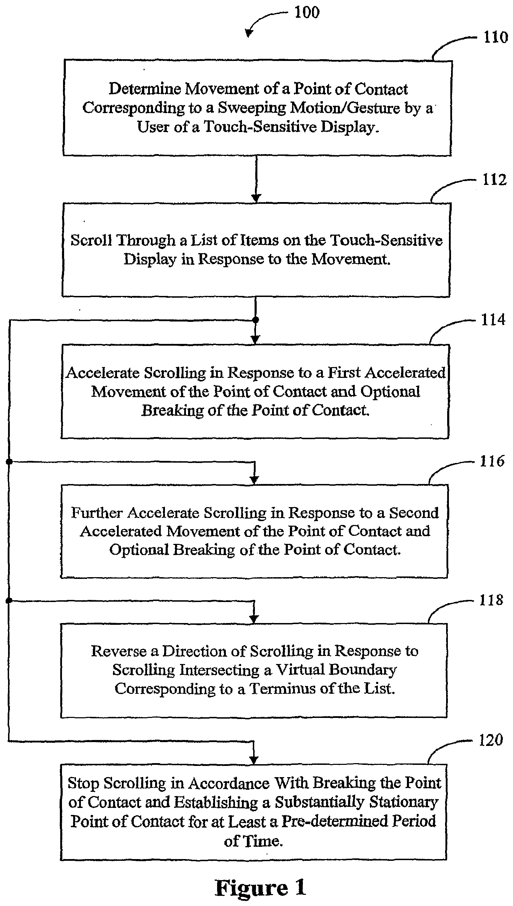

Attention is now given to embodiments of a method of continuously scrolling a list with acceleration. Figure 1 is a flow diagram illustrating an embodiment of a method 100 of scrolling through a list. Movement of a point of contact corresponding to a sweeping motion or gesture by a user of a touch-sensitive display is determined (110). For instance, the movement of the point of contact may be in the same direction that the list is to be scrolled. Thus, if the user wants the list to scroll upwards, the user sweeps a finger (or stylus or the like) in contact with and in an upward direction on the touch-sensitive display. Scrolling the list upward will typically scroll the list to later entries in the list, for instance scrolling from items in category "A" to items in category "B". To scroll the list downward, the user sweeps a finger in a downward direction on the touch-sensitive display. In some embodiments, such as a user interface that simulates a rolodex or a list in inverse alphabetical order, an upward movement of a point of contact causes earlier entries in the list to be displayed, whereas a downward movement of the point of contact causes later entries in the list to be displayed. In this description, the terms "upward" and "downward" are directions relative to the top and bottom of a GUI on the touch-sensitive display.

In some embodiments, the list scrolling method described here operates without displaying a scroll bar. The user's sweeping motion on the touch-sensitive display operation may be performed directly on top of the displayed list, and may include a sweeping or gliding motion, in contact with the display's surface, along a path anywhere within a display window in which the list is displayed. While a scroll bar could potentially be displayed in conjunction with the displayed list, the scrolling method described here can be independent of any such scroll bar. If a scroll bar is used, then an upward movement of a point of contact on the scroll bar may cause earlier entries in the list to be displayed, whereas a downward movement of the point of contact on the scroll bar may cause later entries in the list to be displayed.

A list of items on the touch-sensitive display is scrolled in response to the movement (112). One or more of the following operations may occur. In response to a first accelerated movement of the point of contact and optional breaking of the point of contact, the scrolling may accelerate (114). In response to a second accelerated movement of the point of contact and optional breaking of the point of contact, the scrolling may further accelerate (116). A direction of the scrolling may reverse when the scrolling list intersects a virtual boundary corresponding to a terminus of the list (118). For example, when the list is scrolled to its beginning or end, the scrolling list may appear to bounce again at a boundary and reverse direction. After the bounce or scrolling direction reversal, the scrolling may automatically stop so as to leave the first or last item of the list in view on the touch-sensitive display. The scrolling may stop when the user breaks the point of contact (e.g., by lifting his/her finger off the display) and then establishing a substantially stationary point of contact for at least a pre-determined period of time (120). In other embodiments, the method 100 may include fewer operations or additional operations. In addition, two or more operations may be combined and/or an order of the operations may be changed.

In some embodiments, scrolling may be in accordance with a speed of movement of the point of contact. The speed may be a time average of values determined during several time intervals. In an exemplary embodiment, the speed, velocity and/or acceleration may be determined over five time intervals, where a respective time interval corresponds to an inverse of a frame rate, such as 0.0167 s, of a display. In some embodiments, the speed velocity and/or acceleration may be determined even when a variable frame rate is used, such as when one or more frames are skipped or not displayed. In these embodiments, the speed, velocity and/or acceleration may be determined two or more times for the respective time interval and/or may be projected based on values determined in a preceding and/or a subsequent time interval.

In some embodiments, the scrolling after a user optionally breaks the contact may be in accordance with the change in the acceleration and the speed or the velocity in one or more time intervals prior to the breaking of the contact. For example, the velocity $v_f$ of scrolling one or more time intervals after breaking contact may be determined using

$$v_f = v_o + a\Delta t,$$

where $v_o$ is a current value of the velocity when the contact is broken, a is a current value of the acceleration when the contact is broken and $\Delta t$ is an elapsed time, such as one time interval. The velocities and/or acceleration in such a calculation may be projected along an axis or direction of the scrolling. In some embodiments, in subsequent time intervals following the determination of the velocity based on the acceleration and/or the velocity in one or more time intervals prior to the breaking of the contact, the velocity of the scrolling may be tapered. For example, in each successive time interval the velocity may be decreased by 5 %. When the velocity crosses a lower threshold, it may be set to zero.

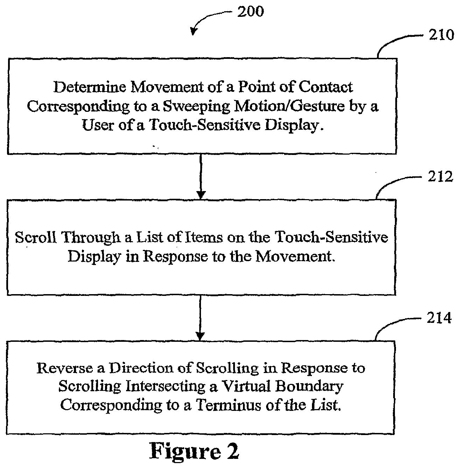

Figure 2 is a flow diagram illustrating an embodiment of a method 200 of scrolling through a list. Movement of a point of contact corresponding to a sweeping motion or gesture by a user of a touch-sensitive display is determined (208). A determination is made if the movement of the point of contact corresponds to a displacement greater than a pre-determined magnitude (210). A list of items on the touch-sensitive display is scrolled in response to the movement (212). A direction of the scrolling may reverse when the scrolled list intersects a virtual boundary corresponding to a terminus of the list (214). In other embodiments, the method 200 may include fewer operations or additional operations. In addition, two or more operations may be combined and/or an order of the operations may be changed.

Determining if the point of contact corresponds to a displacement greater than the pre-determined value (210) allows small variations, such as less than 0.5, 1 or 2 mm, in the point of contact to occur without scrolling the list of items (212). For example, when the user taps on the touch sensitive screen there may be small, unintentional changes in the point of contact. When the movement corresponds to a displacement greater than the pre-determined magnitude, the scrolling (212) commences smoothly. For example, an offset in the point of contact may be included when scrolling through the list of items. The offset corresponds to the pre-determined magnitude of the displacement. The offset may prevent or reduce an abrupt jump or discontinuity in a displayed image corresponding to the list.

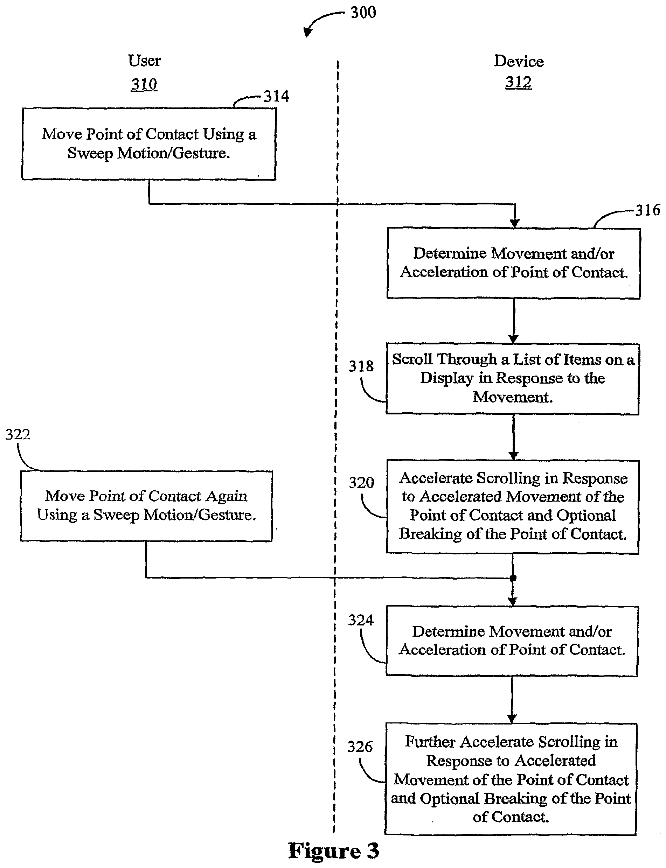

Figure 3 is a flow diagram illustrating an embodiment of a method 300 of scrolling through a list. A user 310 moves a point of contact using a sweep motion or gesture (314) on the touch-sensitive display of a device. The device 312 determines movement and/or acceleration of the point of contact (316), and scrolls a list of items on its display in response to the movement (318). The device accelerates the scrolling in response to accelerated movement of the point of contact and optional breaking of the point of contact (320). The user 310 may move the point of contact again using the sweep motion/gesture (322). The device 312 again determines movement and/or acceleration of the point of contact (324), and further accelerates the scrolling in response to the accelerated movement of the point of contact and optional breaking of the point of contact (326). In other embodiments, the method 300 may include fewer operations or additional operations. In addition, two or more operations may be combined and/or an order of the operations may be changed.

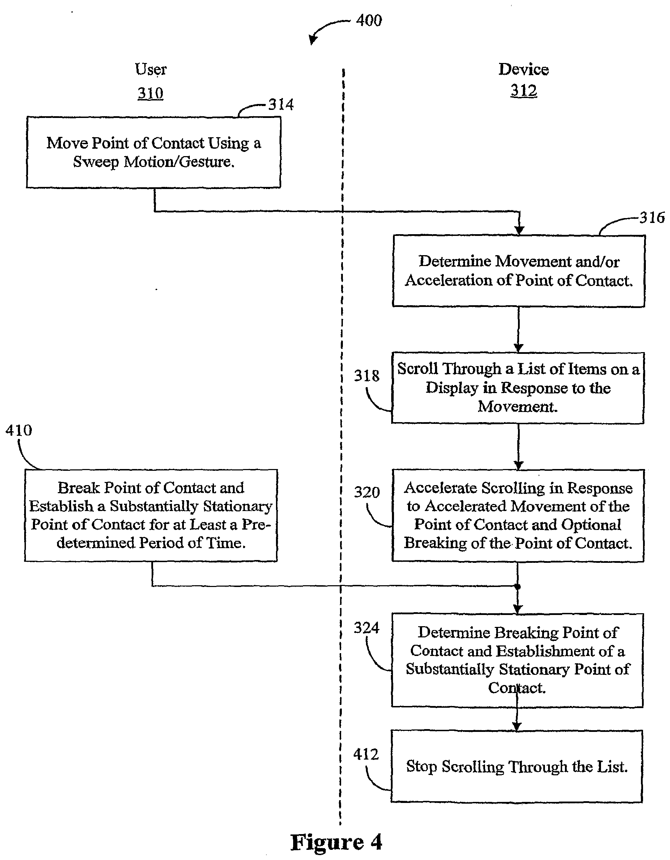

Figure 4 is a flow diagram illustrating an embodiment of a method 400 of scrolling through a list. A user 310 moves a point of contact using a sweep motion or gesture (314) on the touch-sensitive display of a device. The device 312 determines movement and/or acceleration of the point of contact (316), and scrolls a list of items on its display in response to the movement (318). The device accelerates the scrolling in response to accelerated movement of the point of contact and optional breaking of the point of contact (320). The user 310 may break the point of contact and establish a substantially stationary point of contact for at least a pre-determined period of time (410). The device 312 determines the breaking of the point of contact and the establishment of a substantially stationary point of contact (412), and responds by stopping the scrolling (414). In other embodiments, the method 400 may include fewer operations or additional operations. In addition, two or more operations may be combined and/or an order of the operations may be changed.

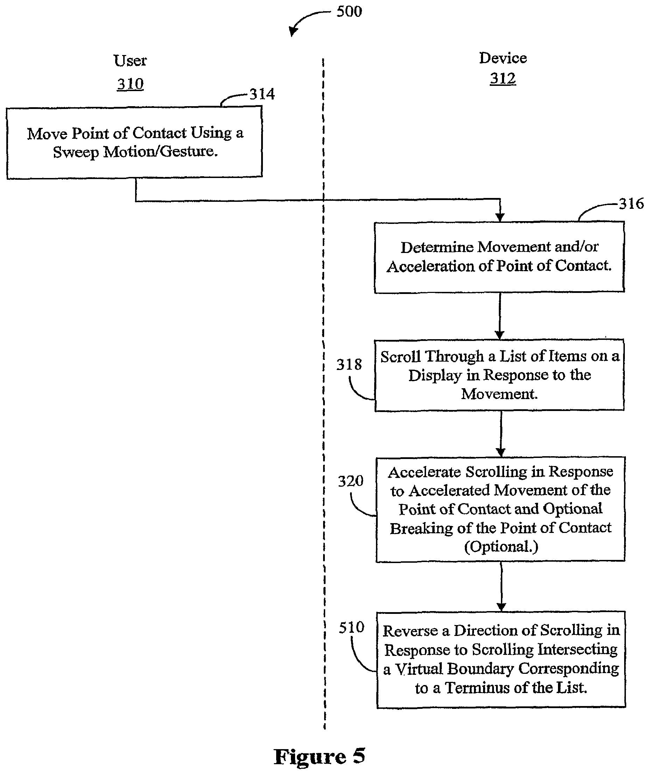

Figure 5 is a flow diagram illustrating an embodiment of a method 500 of scrolling through a list. Operations 314 through 320 are as described above, and furthermore the accelerated scrolling operation 320 may be skipped when the user does not move a point of contact in an accelerated manner. When the scrolling list intersects a virtual boundary corresponding to a terminus of the list, the direction of scrolling is reversed (510), at least momentarily. In some embodiments, the scrolling reverses and then comes to a stop in a damped fashion when the terminus of the list is reached. In other embodiments, the method 500 may include fewer operations or additional operations. In addition, two or more operations may be combined and/or an order of the operations may be changed.

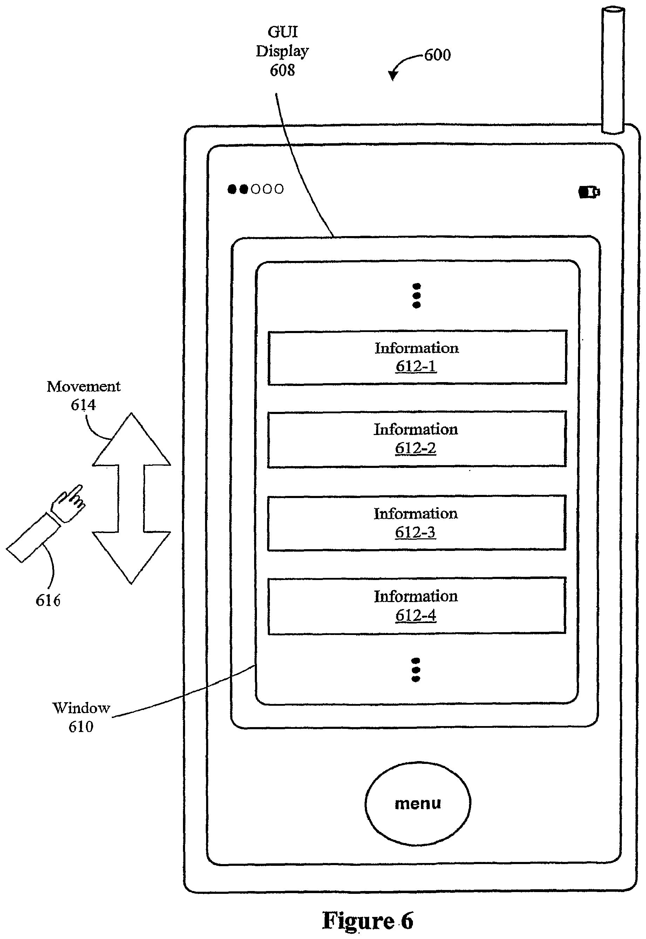

Figure 6 is a schematic diagram illustrating an embodiment of a user interface of a portable electronic device 600 having a touch-sensitive display 608. The display 608 may include a window 610. The window 610 may include one or more displayed objects, such as information objects 612-1 to 612-4. In an exemplary embodiment, the information objects 612 may correspond to contact information for one or more individuals in a list of items. The displayed objects may be moved in response to detecting or determining movement 614 of a point of contact with the display, such as that associated with one or more digits 616 of a user (which are not drawn to scale in Figure 6). In some embodiments, movement of the displayed objects may be accelerated in response to detecting or determining accelerated movement of the point of contact. While embodiment 600 includes one window 610, in other embodiments there may be two or more display windows. In addition, while embodiment 600 illustrates movement 614 in a particular direction, in other embodiments movement of the displayed objects may be in response to movement 614 in one or more other directions, or in response to a scalar (i.e., a determined or detected movement independent of the direction).

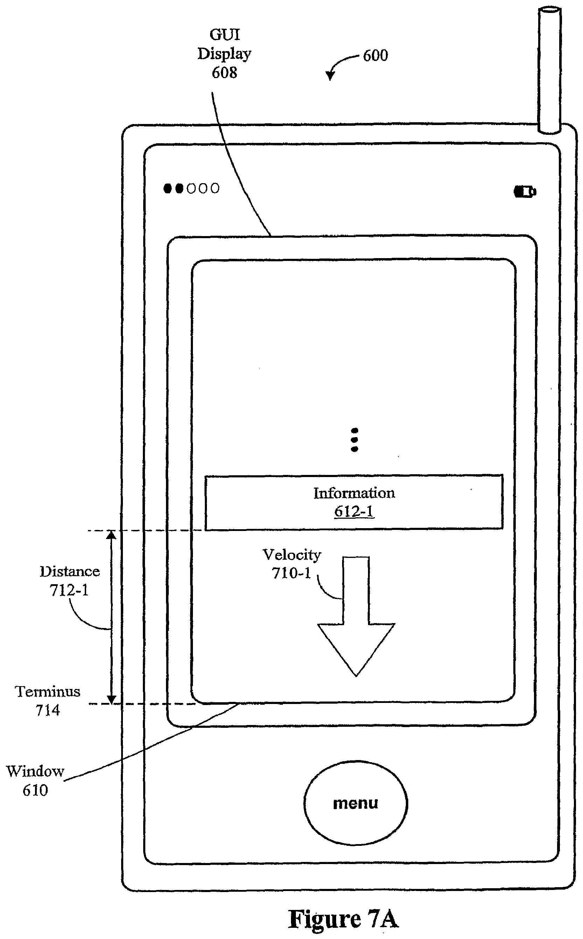

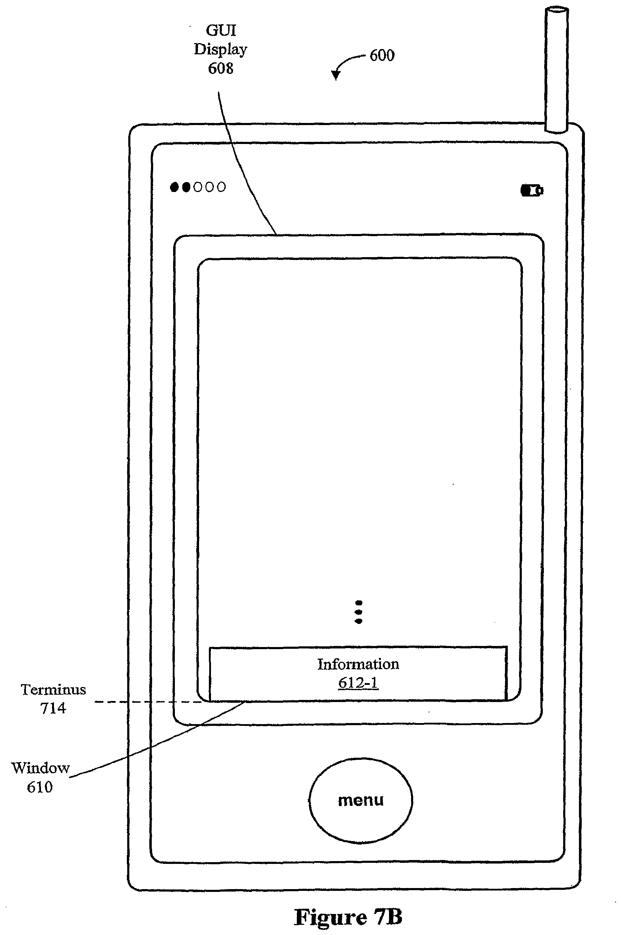

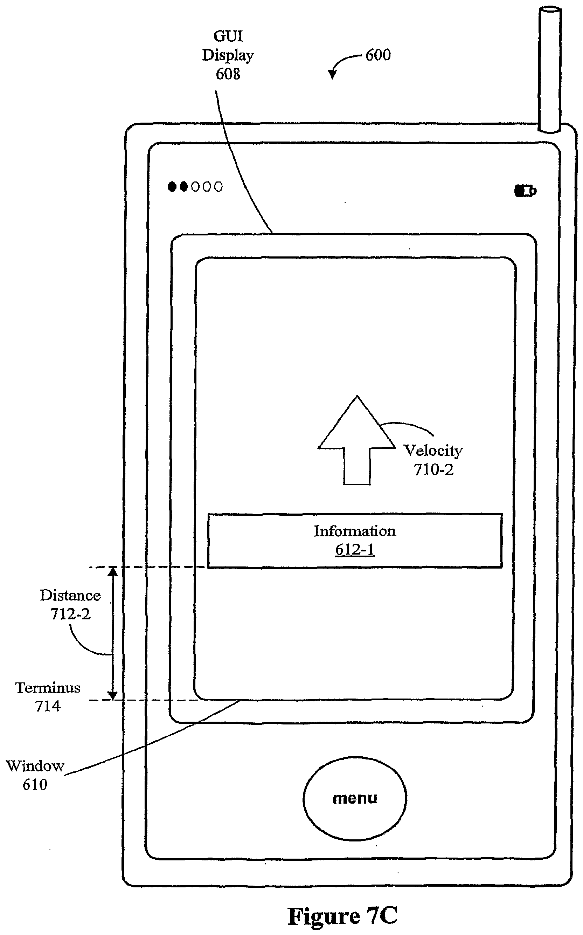

Figures 7A-7B illustrate the scrolling of a list of items to a terminus of the list, at which point one or more displayed items at the end of the list smoothly bounce off the end of the display, reverse direction, and then optionally come to a stop. Figure 7A is a schematic diagram illustrating an embodiment of a user interface of a portable electronic dcvicc 600 having a touch-sensitive display. One or more displayed objects, such as information object 612-1 may be a distance 712-1 from a terminus 714 of the list of items and may be moving with a velocity 710-1 while the list is being scrolled. Note that the terminus 714 is a virtual boundary associated with the displayed objects, as opposed to a physical boundary associated with the window 610 and/or the display 608. As illustrated in Figure 7B, when the one or more displayed objects, such as the information object 612-1, reach or intersect with the terminus 714, the movement corresponding to the scrolling may stop, i.e., the scrolling velocity may be zero at an instant in time. As illustrated in Figure 7C, the one or more displayed objects, such as the information 612-1, may subsequently reverse direction. At a time after the intersection with the terminus 714, the information object 612-1 may have velocity 710-2 and may be a distance 712-2 from the terminus 714. In some embodiments, the magnitude of velocity 710-2 may be less than the magnitude of velocity 710-1 when the distance 712-2 equals the distance 712-1, i.e., the motion of the one or more displayed objects is damped after the scrolling list reaches and "bounces" at its terminus.

Attention is now given to embodiments of an index for the list of items or information items. Figure 8 is a flow diagram illustrating an embodiment of a method 800 of scrolling through a list. Movement of a point of contact over an index displayed on a touch-sensitive display is determined (810). The displayed index may have a sequence of index items. A list of items on the touch-sensitive display is scrolled in response to the user's movement of the point of contact over the index (812). The list of information items may include a sequence of information item subsets corresponding to the sequence of index items. For instance, if the index includes index items A, B, C and D, the sequence of information items may include a subset of items corresponding to index item A, another subset of items corresponding to index item B, another subset of items corresponding to index item C, and yet another subset of items corresponding to index item D. To be even more specific, in one example, each subset of index items contain the same first letter or symbol.

A scroll speed based on the speed of movement of the point of contact over a respective index item and the number of items in the information item subset corresponding to a respective index item may be determined (814). One or more of the following operations may occur. Items in a plurality of the information item subsets may be scrolled through the display, at the determined scroll speed, in response to the point of contact moving over the corresponding index items in the displayed index (816). When the point of contact corresponds to a respective index item in the displayed index, that positioning of the point of contact is detected, and the list of information items is smoothly scrolled to a corresponding subset of the list of information items (818).

In some embodiments, respective index symbols may be displayed adjacent to corresponding subsets of the list of information items while scrolling through the list of information items (820). When the point of contact with the touch-sensitive display corresponds to a selection of a respective information item in the list of information items, that positioning of the point of contact is detected, and information corresponding to the respective information item is displayed in response (822). In other embodiments, the method 800 may include fewer operations or additional operations. Tn addition, two or more operations may be combined and/or an order of the operations may be changed.

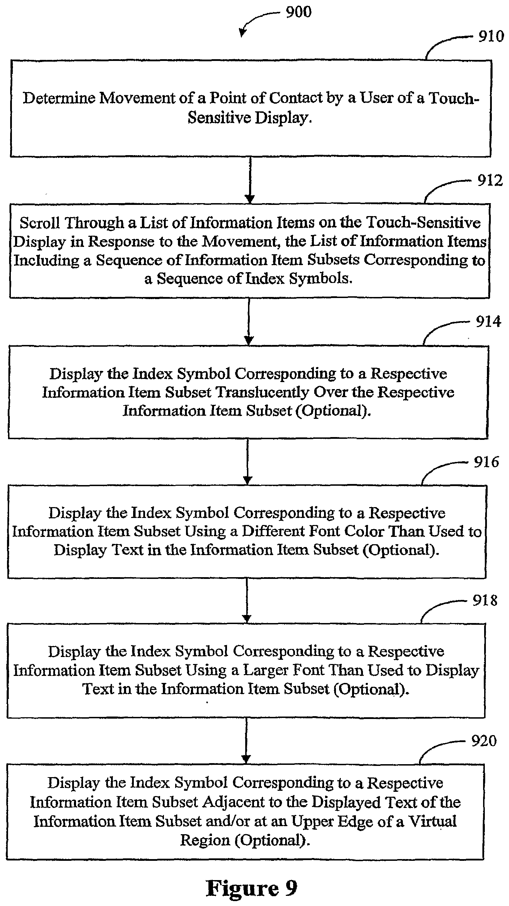

Figure 9 is a flow diagram illustrating an embodiment of a method 900 of scrolling through a list. Movement of a point of contact by a user of a touch-sensitive display is determined (910). A list of information items on the touch-sensitive display is scrolled in response to the movement (912). The list of information items may include a sequence of information item subsets corresponding to a sequence of index symbols. In some embodiments, the index symbol corresponding to a respective information item subset is displayed translucently over the respective information item subset (914). The index symbol corresponding to a respective information item subset may be optionally displayed using a different font color than used to display text in the information item subset (916). The index symbol corresponding to a respective information item subset may be optionally displayed using a larger font than used to display text in the information item subset (918). The index symbol corresponding to a respective information item subset may be optionally displayed adjacent to the displayed text of the information item subset and/or at an upper edge of a virtual region (920). In other embodiments, the method 900 may include fewer operations or additional operations. In addition, two or more operations may be combined and/or an order of the operations may be changed.

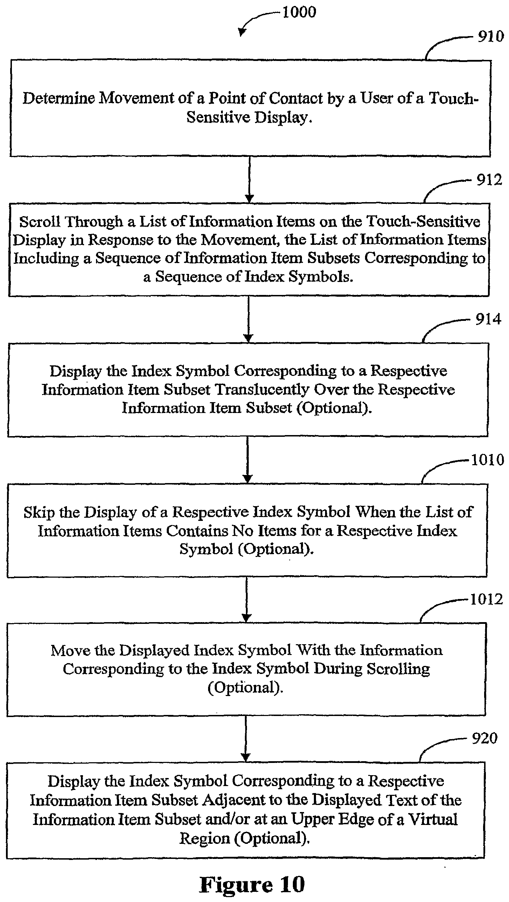

Figure 10 is a flow diagram illustrating an embodiment 1000 of a method of scrolling through a list. Movement of a point of contact by a user of a touch-sensitive display is determined (910). A list of information items on the touch-sensitive display is scrolled in response to the movement (912). The list of information items may include a sequence of information item subsets corresponding to a sequence of index symbols. The index symbol corresponding to a respective information item subset may be optionally displayed translucently over the respective information item subset (914). The display of a respective index symbol may be skipped when the list of information items contains no items for a respective index symbol (1010). The displayed index symbol may be optionally moved with the information corresponding to the index symbol while the list is scrolled (1012). The index symbol corresponding to a respective information item subset may be optionally displayed adjacent to the displayed text of the information item subset and/or at an upper edge of a virtual region (920). In other embodiments, the method 1000 may include fewer operations or additional operations. In addition, two or more operations may be combined and/or an order of the operations may be changed.

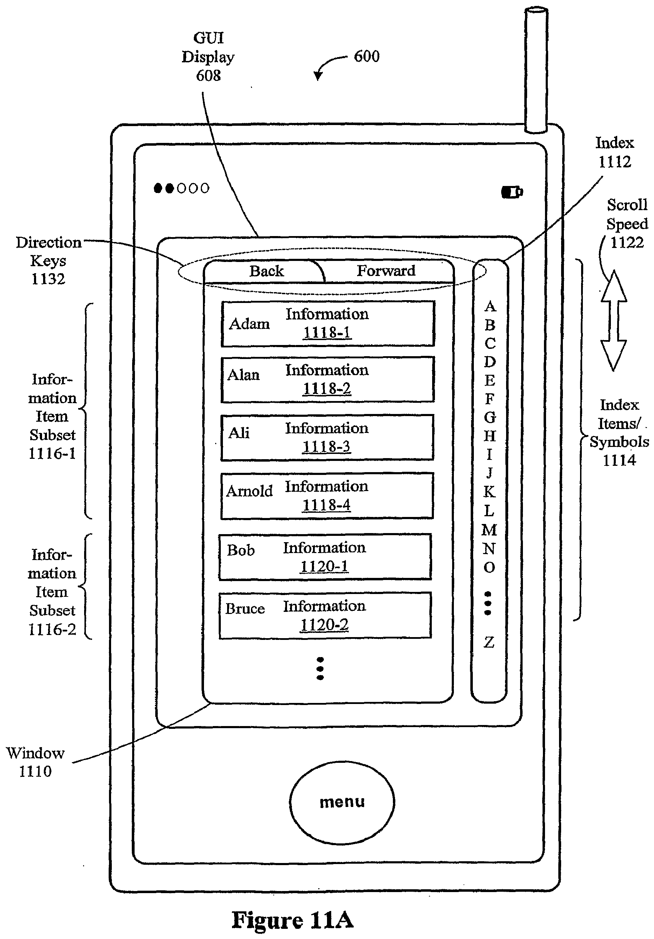

Figure 11A is a schematic diagram illustrating an embodiment of a user interface of a portable electronic device 600 having a touch-sensitive display 608. The display 608 may include a window 1110 containing a plurality of objects corresponding to a list of information items, such as information objects 1118 and 1120. The information objects 1118 and 1120 may be part of an alphabetically ordered list (e.g., arranged according to the first and/or the last name). The information objects 1118 and 1120 may be grouped into information item subsets 1116, for example, each information item subset 1116 may be based on one or more letters of the alphabet.

The display 608 may also include an index 1112 in a separate window. The index 1112 may include a sequence of index items or index items/symbols 1114, such as letters of the alphabet. The index 1112 may be used to scroll through the information item subsets 1116. Motion of a point of contact with the display 608 over the index 1112 results in scrolling through the information item subsets 1116. In some embodiments, the information items are scrolled at a speed 1122 that is based both on the speed, velocity and/or acceleration of movement of the point of contact and the number of items in the information item subsets corresponding to the index items over which the point of contact moves.

In some embodiments, if the user moves the point of contact to a respective index item/symbol in the index 1112, the list of information items is quickly and smoothly scrolled to the corresponding information item subset. In some other embodiments, if the user makes a point over contact over a respective index item/symbol, items from the corresponding information item subset are displayed, i.e., there may be a jump to that subset of the information items.

If the user makes a point of contact, i.e., touches the display 608, over one of the information items, such as information 1118-1, corresponding contact information may be displayed in a the window 1110. The user may also change to or from viewing such contact information using the forward and back navigation keys 1132.

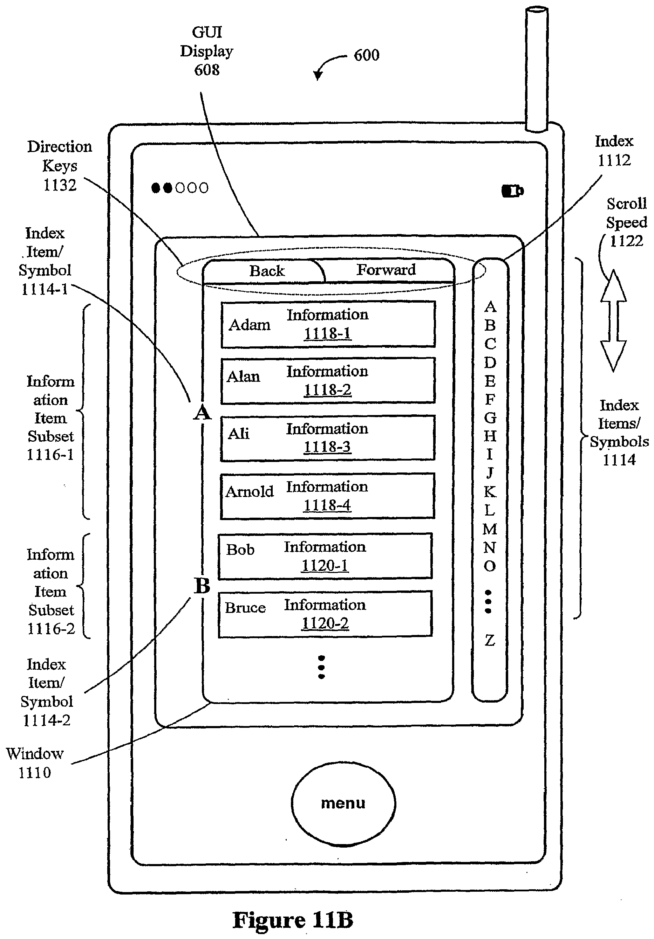

In some embodiments, index symbols may be displayed in an index 1112, and also adjacent to corresponding subsets of information items. Several implementations are illustrated in Figures 11B-11D. In Figure 11B index items/symbols 1114-1 and 1114-2 are displayed adjacent to corresponding information items subsets 1116-1 and 1116-2. As the list of information items is scrolled, the index items/symbols 1114-1 and 1114-2 may move up and/or down in conjunction with the information 1118 and 1120. The index items/symbols 1114-1 and 1114-2 may be translucent, use a different font size than the displayed text for the information 1118 and 1120, and/or use a different font color than the displayed text for the information 1118 and 1120.

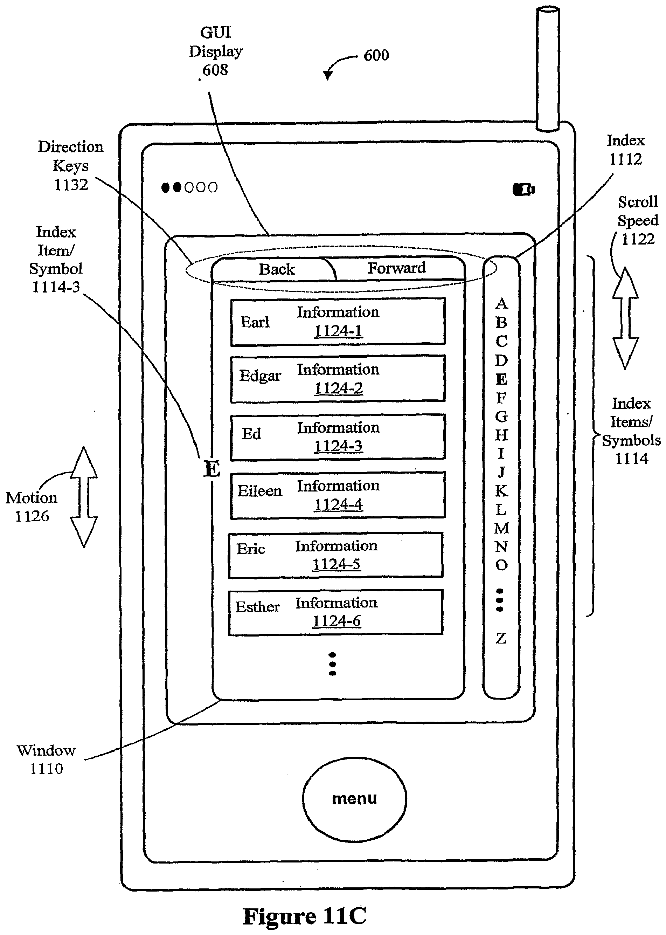

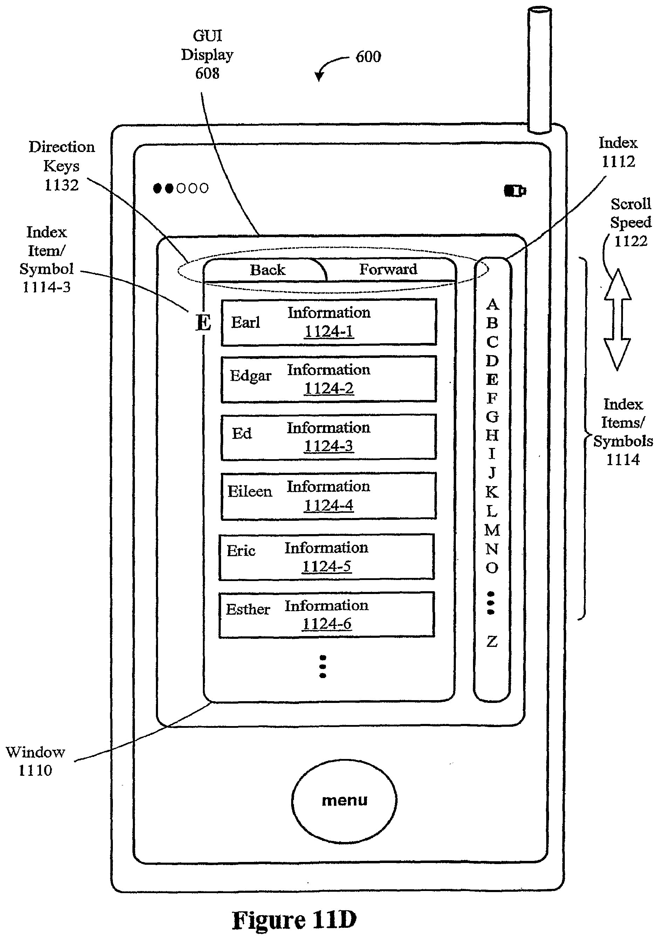

In some embodiments, an index item/symbol is displayed approximately adjacent to information and at a mid-point of the window 1110. As illustrated in Figure 11C, index item/symbol 1114-3 is displayed adjacent to information 1124 and at a mid-point of the window 1110. The index item/symbol 1114-3 may move up and down about the mid-point during scrolling of the list of information items. In other embodiments, the index item/symbol 1114-3 may be displayed at or near an upper edge of the window 1110, as illustrated in Figure 11D. In other embodiments, the index item/symbol 1114 may be displayed at or near an upper edge of the window 1110 in a banner.

The index item/symbol 1114-3 may remain adjacent to a first displayed item of a respective information item subset. When scrolling up through the list of information items (e.g., in response to an upward swipe on the touch sensitive display by the user), the index item/symbol 1114-3 may move from a lower edge of the window to the upper edge of the window 1110. As the scrolling continues, the index item/symbol 1114-3 may remain there until the end of the respective information item subset is reached, at which time the index item/symbol 1114-3 may be replaced with a subsequent index item/symbol.

When scrolling down through the list of information items (e.g., in response to an downward swipe on the touch sensitive display by the user), the index item/symbol 1114-3 may remain at the upper edge of the window 1110 until the beginning of the respective information item subset is reached, at which time the index item/symbol 1114-3 may scroll from the upper edge of the window 1110 to the lower edge of the window 1110. Simultaneously, a preceding index item or symbol may be displayed at the upper edge of the window 1110.

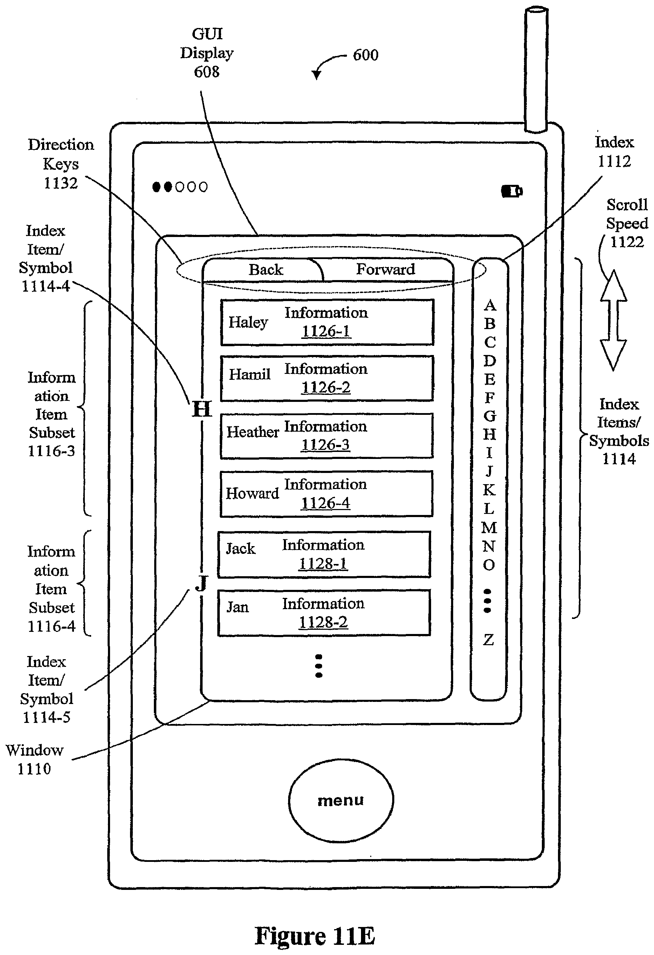

In some embodiments, one or more of the index item/symbols 1114 may not be displayed, i.e., may be skipped, if the corresponding one or more of the information item subsets 1116 are empty, i.e., do not contain any information entries. This is illustrated in Figure 11E, in which an index item/symbol for the letter 'I' has been skipped. Index item/symbols 1114-4 and 1114-5 are displayed since there is corresponding information 1126 and 1128.

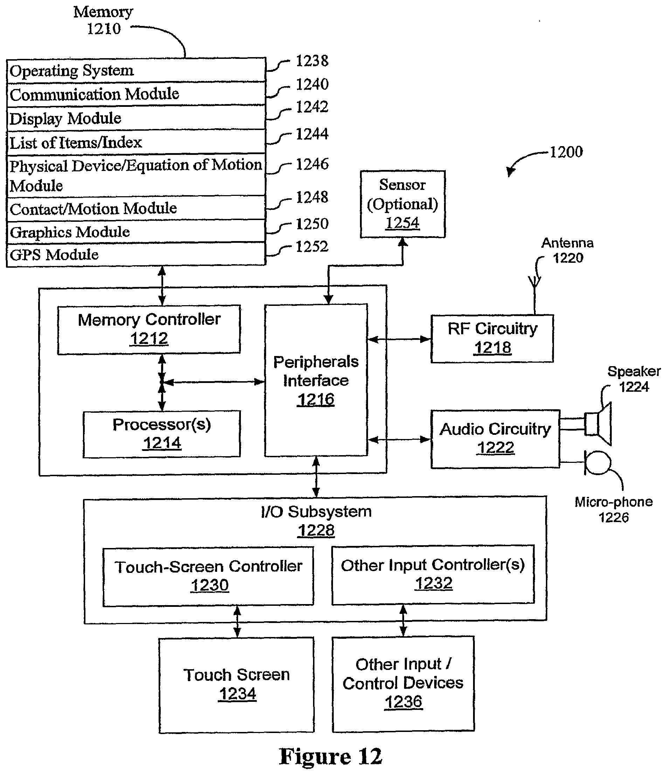

Attention is now directed to embodiments of devices. Figure 12 is a block diagram illustrating an embodiment of a device 1200, such as a portable electronic device having a touch-sensitive display 1234. The device 1200 may include a memory controller 1212, one or more data processors, image processors and/or central processing units 1214 and a peripherals interface 1216. The memory controller 1212, the one or more processors 1214 and/or the peripherals interface 1216 may be separate components or may be integrated, such as in one or more integrated circuits. The various components in the device 1200 may be coupled by one or more communication buses or signal lines.

The peripherals interface 1216 may be coupled to an optional sensor 1254, such as CMOS or CCD image sensor, RF circuitry 1218, audio circuitry 1222 and/or an input/output (I/O) subsystem 1228. The audio circuitry 1222 may be coupled to a speaker 1224 and a micro-phone 1226. The device 1200 may support voice recognition and/or voice replication. The RF circuitry 1218 may be coupled to one or more antennas 1220 and may allow communication with one or more additional devices, computers and/or servers using a wireless network. The device 1200 may support a variety of communications protocols, including code division multiple access (CDMA), global system for mobile communications (GSM), Enhanced Data GSM Environment (EDGE), Wi-Fi (such as IEEE 802.11a, IEEE 802.11b, IEEE 802.11g and/or IEEE 802.11n), Bluetooth, Wi-MAX, a protocol for email, instant messaging, and/or a simple message system (SMS), or any other suitable communication protocol, including communication protocols not yet developed as of the filing date of this document. In an exemplary embodiment, the device 1200 may be, at least in part, a cellular telephone.

The I/O subsystem 1228 may include a touch screen controller 1230 and/or other input controller(s) 1232. The touch-screen controller 1230 may be coupled to a touch-sensitive screen 1234. The touch screen 1234 and touch screen controller 1230 may detect contact and any movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen 1234. The touch-sensitive screen 1234 may have a resolution in excess of 100 dpi. In an exemplary embodiment, the touch screen 1234 has a resolution of approximately 168 dpi. The other input controllers) 1232 may be coupled to other input/control devices 1236, such as one or more buttons, a keyboard, infrared port, USB port, and/or a pointer device such as a mouse. The one or more buttons (not shown) may include an up/down button for volume control of the speaker 1224 and/or the micro-phone 1226. The one or more buttons (not shown) may include a push button. A quick press of the push button (not shown) may disengage a lock of the touch screen 1234. A longer press of the push button (not shown) may turn power to the device 1200 on or off. The user may be able to customize a functionality of one or more of the buttons. The touch screen 1234 may be used to implement virtual or soft buttons and/or a keyboard.

In some embodiments, the device 1200 may include circuitry for supporting a location determining capability, such as that provided by the global positioning system (GPS). In some embodiments, the device 1200 may be used to play back recorded music, such as one or more files, such as MP3 files or AAC files. In some embodiments, the device 1200 may include the functionality of an MP3 player, such as an iPod (trademark of Apple Computer, Inc.). The device 1200 may, therefore, include a 36-pin connector that is compatible with the iPod.

The memory controller 1212 may be coupled to memory 1210. Memory 1210 may include high-speed random access memory and/or non-volatile memory, such as one or more magnetic disk storage devices, one or more optical storage devices, and/or flash memory. Memory 1210 may store an operating system 1238, such as Darwin, RTXC, LINUX, UNIX, OS X, WINDOWS, or an embedded operating system such as VxWorks. The operating system 1238 may include procedures (or sets of instructions) for handling basic system services and for performing hardware dependent tasks. Memory 1210 may also store communication procedures (or sets of instructions) in a communication module 1240. The communication procedures may be used for communicating with one or more additional devices, one or more computers and/or one or more servers. The memory 1210 may include a display module (or a set of instructions) 1242, a list of items/index 1244, a physical device/equation of motion module (or a set of instructions) 1246 (for governing the scrolling of a list on the display 1234), contact/motion module (or a set of instructions) 1248 to determine the point of contact and/or its movement, a graphics module (or a set of instructions) 1250, and/or a GPS module 1252. The graphics module 1250 may support widgets, i.e., modules or applications with embedded graphics. The widgets may be implemented using Java-Script, HTML, or other suitable languages.

Each of the above identified modules and applications corresponds to a set of instructions for performing one or more functions dcscribcd above. These modules (i.e., sets of instructions) need not be implemented as separate software programs, procedures or modules. The various modules and sub-modules may be rearranged and/or combined. Memory 1210 may include additional modules and/or sub-modules, or fewer modules and/or sub-modules. Memory 1210, therefore, may include a subset or a superset of the above identified modules and/or sub-modules. Various functions of the device 1200 may be implemented in hardware and/or in software, including in one or more signal processing and/or application specific integrated circuits.

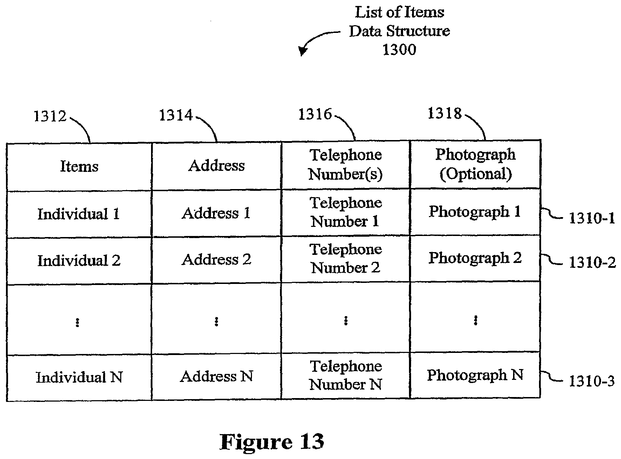

Attention is now directed towards data structures for implementing the list of items or information items. Figure 13 is a block diagram illustrating an embodiment of a data structure 1300 for a list of items. The data structure 1300 includes a plurality of item entries 1310. In some embodiments, each item entry 1310 includes an item name or identifier 1312, one or more addresses 1314, one or more telephone numbers 1316, one or more optional photographs 1318, and/or one or more fields with miscellaneous information 1320 about the item.

The foregoing descriptions of specific embodiments of the present invention are presented for purposes of illustration and description. They are not intended to be exhaustive or to limit the invention to the precise forms disclosed. Rather, it should be appreciated that many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. An electronic device (1200), comprising:

a touch-sensitive display (1234); one or more processors (1214); memory (1210); and one or more programs (1238 to 1252), wherein the one or more programs (1238 to 1252) are stored in the memory (1210) and configured to be executed by the one or more processors (1214), the programs (1238 to 1252) including:

instructions for displaying on the touch-sensitive display (1234) an index (1112) that includes a sequence of index items (1114), and a list of information items (1118, 1120, 1124, 1126) that includes a sequence of information item subsets (1116-1 to 1116-4) corresponding to the sequence of index items (1114);
instructions for detecting a first point of contact of a user over the index (1112) displayed on the touch-sensitive display (1234);
instructions for determining a respective index item (1114) that corresponds to the first point of contact and displaying a respective information item subset (1116-1 to 1116-4) that corresponds to the respective index item (1114);
instructions for determining an upward swipe of a second point of contact of the user over the list of information items (1118, 1120, 1124, 1126) displayed on the touch-sensitive display (1234) and scrolling the list of information items (1118, 1120, 1124, 1126) on the touch-sensitive display (1234) in response to the upward swipe; and
instructions for displaying, while scrolling through respective information subsets (1116-1, 1116-2), in conjunction with each respective information item subset (1116-1, 1116-2) a corresponding index symbol (1114-1, 1114-2), wherein the corresponding index symbol (1114-1, 1114-2) moves on the touch-sensitive display (1234) in accordance with the respective information item subset (1116-1, 1116-2), and wherein moving the corresponding index symbol (1114-3) on the touch-sensitive display (1234) in accordance with the respective information item subset includes: in response to an upward swipe over the list of information items displayed on the touch-sensitive display (1234), moving an index symbol (1114-3) from a lower edge of a window (1110) to an upper edge of the window (1110) and maintaining as the scrolling continues the display of the index symbol (1114-3) at the upper edge of the window (1110) until an end of a corresponding information item subset is reached whereupon the index symbol is replaced with the subsequent index symbol.

2. The device of claim 1, wherein the index (1112) is displayed on the touch-sensitive display (1234) without also displaying a scroll bar that is separate from the index (1112).

3. The device of claim 1 or 2, wherein the instructions for displaying the respective information item subset (1116-1 to 1116-4) includes instructions for jumping to the respective information item subset (1116-1 to 1116-4), if the point of contact corresponds to the respective index item (1114).

4. The device of claim 1 or 2, wherein the corresponding index symbol (1114-3) remains adjacent to a first displayed item (1124) of the respective information item subset.

5. The device of any of claims 1 to 4, including instructions for detecting a third point of contact with the touch-sensitive display (1234) corresponding to user selection of a respective information item in the list of information items (1118, 1120, 1124, 1126) and displaying on the touch-sensitive display (1234) information corresponding to the respective information item.

6. The device of any of claims 1 to 5, wherein the electronic device (1200) is a portable device that includes wireless communications and a music player.

7. A computer-implemented method, comprising:

at an electronic device (1200) with a touch-sensitive display (1234):

displaying on the touch-sensitive display (1234) an index (1112) that includes a sequence of index items (1114), and a list of information items (1118, 1120, 1124, 1126) that includes a sequence of information item subsets (1116-1 to 1116-4) corresponding to the sequence of index items (1114); detecting a first point of contact of a user over the index (1112) displayed on the touch-sensitive display(1234); determining a respective index item (1114) that corresponds to the first point of contact and displaying a respective information item subset (1116-1 to 1116-4) that corresponds to the respective index item (1114); and determining an upward swipe of a second point of contact of the user over the list of information items (1118, 1120, 1124, 1126) displayed on the touch-sensitive display (1234) and scrolling the list of information items (1118, 1120, 1124, 1126) on the touch-sensitive display (1234) in response to the upward swipe; and displaying, while scrolling through respective information subsets (1116-1, 1116-2), in conjunction with each respective information item subset (1116-1, 1116-2) a corresponding index symbol (1114-1, 1114-2), wherein the corresponding index symbol (1114-1, 1114-2) moves on the touch-sensitive display (1234) in accordance with the respective information item subset (1116-1, 1116-2), wherein moving the corresponding index symbol (1114-3) on the touch-sensitive display (1234) in accordance with the respective information item subset includes: in response to an upward swipe over the list of information items on the touch-sensitive display (1234), moving an index symbol (1114-3) from a lower edge of a window (1110) to an upper edge of the window (1110) and maintaining display of the index symbol (1114-3) at the upper edge of the window (1110) until an end of a corresponding information item subset is reached whereupon the index symbol is replaced with the subsequent index symbol.

**8.** The computer-implemented method of claim 7, wherein the index (1112) is displayed on the touch-sensitive display (1234) without also displaying a scroll bar that is separate from the index (1112).

**9.** The computer-implemented method of claim 7 or 8, wherein displaying the respective information item subset (1116-1 to 1116-4) includes jumping to the respective information item subset (1116-1 to 1116-4) if the point of contact corresponds to the respective index item (1114).

**10.** The computer-implemented method of claim 7 or 8, wherein the corresponding index symbol (1114-3) remains adjacent to a first displayed item (1124) of the respective information item subset.

**11.** The computer-implemented method of any of claims 7 to 10, including detecting a third point of contact with the touch-sensitive display (1234) corresponding to user selection of a respective information item in the list of information items (1118, 1120, 1124, 1126) and displaying on the touch-sensitive display (1234) information corresponding to the respective information item.

**12.** The computer-implemented method of any of claims 7 to 11, wherein the electronic device (1200) is a portable device that includes wireless communications and a music player.

**13.** A computer program product with instructions configured for execution by one or more processors (1214), which when executed by an electronic device (1200) with a touch sensitive display (1234), cause the device (1200) to perform the method of any one of claims 7 to 12.

**Patentansprüche**

**1.** Elektronische Vorrichtung (1200), die aufweist:

eine berührungsempfindliche Anzeige (1234); ein oder mehrere Prozessoren (1214); Speicher (1210); und ein oder mehrere Programme (1238 bis 1252), wobei das eine oder die mehreren Programme (1238 bis 1252) in dem Speicher (1210) gespeichert sind und so konfiguriert sind, dass sie durch den einen oder die mehreren Prozessoren (1214) ausgeführt werden können, wobei die Programme (1238 bis 1252) umfassen:

Anweisungen zum Anzeigen auf der berührungsempfindlichen Anzeige (1234) eines Index (1112), der eine Sequenz von Indexelementen (1114) umfasst und eine Liste von Informationselementen (1118, 1120, 1124, 1126), die eine Sequenz von Informationselemente-Untermengen (1116-1 bis 1116-4) entsprechend der Sequenz von Indexelementen (1114) umfasst; Anweisungen zum Erfassen eines ersten Kontaktpunktes eines Benutzers über dem Index (1112), der auf der berührungsempfindlichen Anzeige (1234) angezeigt ist; Anweisungen zum Bestimmen eines respektiven Indexelementes (1114), das dem ersten Kontaktpunkt entspricht, und Anzeigen einer entsprechenden Informationselemente-Untermenge (1116-1 bis 1116-4), die dem jeweiligen Indexelement (1114) entspricht;

Anweisungen zum Bestimmen einer Aufwärtswischbewegung eines zweiten Kontaktpunktes des Benutzers über der Liste von Informationselementen (1118, 1120, 1124, 1126), die auf der berührungsempfindlichen Anzeige (1234) angezeigt wird, und Scrollen der Liste von Informationselementen (1118, 1120, 1124, 1126) auf der berührungsempfindlichen Anzeige (1234) in Antwort auf die Aufwärtswischbewegung; und

Anweisungen zum Anzeigen, während durch jeweilige Informationsuntermengen (1116-1, 116-2) gescrollt wird, in Verbindung mit jeder jeweiligen Informationselemente-Untermenge (1116-1, 1116-2) eines entsprechenden Indexsymbols (1114-1, 1114-2), wobei das entsprechende Indexsymbol (1114-1, 1114-2) sich auf der berührungsempfindlichen Anzeige (1234) in Übereinstimmung mit der jeweiligen Informationselemente-Untermenge (1116-1, 1116-2) bewegt und wobei Bewegen des entsprechenden Indexsymbols (1114-3) auf der berührungsempfindlichen Anzeige (1234) in Übereinstimmung mit der jeweiligen Informationselemente-Untermenge umfasst: in Antwort auf eine Aufwärtswischbewegung über die Liste von Informationselementen, die auf der berührungsempfindlichen Anzeige (1234) angezeigt wird, Bewegen eines Indexsymbols (1114-3) von einer unteren Kante eines Fensters (1110) zu einer oberen Kante des Fensters (1110) und Aufrechterhalten, wenn das Scrollen fortfährt, der Anzeige des Indexsymbols (1114-3) an der oberen Kante des Fensters (1110) bis ein Ende einer entsprechenden Informationselemente-Untermenge erreicht ist, woraufhin das Indexsymbol mit dem darauffolgenden Indexsymbol ersetzt wird.

2. Vorrichtung gemäß Anspruch 1, wobei der Index (1112) auf der berührungsempfindlichen Anzeige (1234) angezeigt wird, ohne auch einen Scrollbalken anzuzeigen, der getrennt von dem Index (1112) ist.

3. Vorrichtung gemäß Anspruch 1 oder 2, wobei die Anweisung zum Anzeigen der jeweiligen Informationselemente-Untermenge (1116-1 bis 1116-4) Anweisungen umfasst, um zu der jeweiligen Informationselemente-Untermenge (1116-1 bis 1116-4) zu springen, wenn der Kontaktpunkt dem jeweiligen Indexelement (1114) entspricht.

4. Vorrichtung gemäß Anspruch 1 oder 2, wobei das entsprechende Indexsymbol (1114-3) benachbart zu einem ersten angezeigten Element (1124) der jeweiligen Informationselemente-Untermenge bleibt.

5. Vorrichtung gemäß einem der Ansprüche 1 bis 4, umfassend Anweisungen zum Erfassen eines dritten Kontaktpunktes mit der berührungsempfindlichen Anzeige (1234) entsprechend einer Benutzerauswahl eines jeweiligen Informationselementes in der Liste von Informationselementen (1118, 1120, 1124, 1126) und Anzeigen auf der berührungsempfindlichen Anzeige (1234) von Information, die dem entsprechenden Informationselement entspricht.

6. Vorrichtung gemäß einem der Ansprüche 1 bis 5, wobei die elektronische Vorrichtung (1200) eine tragbare Vorrichtung ist, die drahtlose Kommunikation und einen Musikabspieler umfasst.

7. Computerimplementiertes Verfahren, das aufweist:

an einer elektronischen Vorrichtung (1200) mit einer berührungsempfindlichen Anzeige (1234):

Anzeigen auf der berührungsempfindlichen Anzeige (1234) eines Index (1112), der eine Sequenz von Indexelementen (1114) und eine Liste von Informationselementen (118, 1120, 1124, 1126) umfasst, die eine Sequenz von Informationselemente-Untermengen (1116-1 bis 1116-4) entsprechend der Sequenz von Indexelementen (1114) umfasst;

Erfassen eines ersten Kontaktpunktes eines Benutzers über dem Index (1112), der auf der berührungsempfindlichen Anzeige (1234) angezeigt wird;

Bestimmen eines jeweiligen Indexelementes (1114), das dem ersten Kontaktpunkt entspricht und Anzeigen einer jeweiligen Informationselemente-Untermenge (1116-1 bis 1116-4), die dem jeweiligen Indexelement (1114) entspricht; und Bestimmen einer Aufwärtswischbewegung eines zweiten Kontaktpunktes des Benutzers über der Liste von Informationselementen (118, 1120, 1124, 1126), die auf der berührungsempfindlichen Anzeige (1234) angezeigt wird und Scrollen der Liste von Informationselementen (1118, 1120, 1124, 1126) auf der berührungsempfindlichen Anzeige (1234) in Antwort auf die Aufwärtswischbewegung; und

Anzeigen, während des Scrollens durch jeweilige Informationsuntermengen (1116-1; 1116-2), in Verbindung mit jeder der jeweiligen Informationselemente-Untermengen (1116-1, 1116-2) eines entsprechenden Indexsymbols (1114-1, 1114-2), wobei das entsprechende Indexsymbol (1114-1, 11114-2) auf der berührungsempfindlichen Anzeige (1234) sich in Übereinstimmung mit der jeweiligen Informationselemente-Untermenge (1116-1, 1116-2) bewegt, wobei Bewegen des entsprechenden Indexsymbols (1114-3) auf der berührungsempfindlichen Anzeige (1234) in Übereinstimmung mit der jeweiligen Informationselemente-Untermenge umfasst:

in Antwort auf eine Aufwärtswischbewegung über die Liste von Informationselementen auf der berührungsempfindlichen Anzeige (1234), Bewegen eines Indexsymbols (1114-3) von einer unteren Kante eines Fensters (1110) zu einer oberen Kante des Fensters (1110) und Aufrechterhalten der Anzeige des Indexsymbols (1114-3) an der oberen Kante des Fensters (1110) bis ein Ende einer entsprechenden Informationselemente-Untermenge erreicht ist, woraufhin das Indexsymbol mit dem darauffolgenden Indexsymbol ersetzt wird.

8. Computerimplementiertes Verfahren, gemäß Anspruch 7, wobei der Index (1112) auf der berührungsempfindlichen Anzeige (1234) angezeigt ist, ohne auch einen Scrollbalken anzuzeigen, der getrennt von dem Index (1112) ist.

9. Computerimplementiertes Verfahren, gemäß Anspruch 7 oder 8, wobei Anzeigen der jeweiligen Informationselemente-Untermenge (1116-1 bis 1116-4) umfasst Springen zu der jeweiligen Informationselemente-Untermenge (1116-1116-4), wenn der Kontaktpunkt dem jeweiligen Indexelement (1114) entspricht.

10. Computerimplementiertes Verfahren, gemäß Anspruch 7 oder 8, wobei das entsprechende Indexsymbol (1114) benachbart zu einem ersten angezeigten Element (1124) der jeweiligen Informationselemente-Untermenge bleibt.

11. Computerimplementiertes Verfahren, gemäß einem der Ansprüche 7 bis 10, umfassend Erfassen eines dritten Kontaktpunktes mit der berührungsempfindlichen Anzeige (1234), der einer Benutzerauswahl eines jeweiligen Informationselementes in der Liste von Informationselementen (1118, 1120, 1124, 1126) entspricht und Anzeigen auf der berührungsempfindlichen Anzeige (1234), von Information, die dem jeweiligen Informationselement entspricht.

12. Computerimplementiertes Verfahren, gemäß einem der Ansprüche 7 bis 11, wobei die elektronische Vorrichtung (1200) eine tragbare Vorrichtung ist, die drahtlose Kommunikation und einen Musikabspieler umfasst.

13. Computerprodukt mit Anweisungen, die konfiguriert sind zur Ausführung durch einen oder mehrere Prozessoren (1214), die wenn sie durch eine elektronische Vorrichtung (1200) mit einer berührungsempfindlichen Anzeige (1234) ausgeführt werden, die Vorrichtung (1200) dazu veranlassen, das Verfahren gemäß einem der Ansprüche 7 bis 12 durchzuführen.

## Revendications

1. Un dispositif électronique (1200), comprenant :

un afficheur sensible au toucher (1234) ; un ou plusieurs processeurs (1214) ; une mémoire (1210) ; et
un ou plusieurs programmes (1238 à 1252), les un ou plusieurs programmes (1238 à 1252) étant stockés dans la mémoire (1210) et configurés pour être exécutés par les un ou plusieurs processeurs (1214), les programmes (1238 à 1252) comprenant :

des instructions pour l'affichage sur l'afficheur sensible au toucher (1234) d'un index (1112) qui inclut une séquence d'éléments d'index (1114), et d'une liste d'éléments d'information (1118, 1120, 1124, 1126) qui comprend une séquence de sous-ensembles d'éléments d'information (1116-1 à 1116-4) correspondant à la séquence d'éléments d'index (1114) ;
des instructions pour la détection d'un premier point de contact d'un utilisateur au-dessus de l'index (1112) affiché sur l'afficheur sensible au toucher (1234) ;
des instructions pour la détermination d'un élément d'index respectif (1114) qui correspond au premier point de contact et pour l'affichage d'un sous-ensemble d'éléments d'information respectif (1116-1 à 1116-4) qui correspond à l'élément d'index respectif (1114) ;
des instructions pour la détermination d'un balayage vers le haut d'un second point de contact de l'utilisateur au-dessus de la liste d'éléments d'information (1118, 1120, 1124, 1126) affichée sur l'afficheur sensible au toucher (1234) et pour le défilement de la liste d'éléments d'information (1118, 1120, 1124, 1126) sur l'afficheur sensible au toucher (1234) en réponse au balayage vers le haut ; et
des instructions pour l'affichage, pendant le défilement dans les sous-ensembles d'information respectifs (1116-1, 1116-2), en combinaison avec chaque sous-ensemble d'éléments d'information respectif (1116-1, 1116-2), d'un symbole d'index correspondant (1114-1, 1114-2), le symbole d'index correspondant (1114-1, 1114-2) se déplaçant sur l'afficheur sensible au toucher (1234) en fonction du sous-ensemble d'éléments d'information respectif (1116-1, 1116-2), et le déplacement du symbole d'index correspondant (1114-3) sur l'afficheur sensible au toucher (1234) en fonction du sous-ensemble d'éléments d'information respectif comprenant : en réponse à un balayage vers le haut au-dessus de la liste d'éléments d'information affichée sur l'afficheur sensible au toucher (1234), le déplacement d'un symbole d'index (1114-3) d'un bord inférieur d'une fenêtre (1110) à un bord supérieur de la fenêtre (1110) et le maintien pendant que le défilement continue de l'affichage du symbole d'index (1114-3) au bord supérieur de la fenêtre (1110) jusqu'à atteindre une fin d'un sous-ensemble d'éléments d'information correspondant, le symbole d'index étant alors remplacé par le symbole d'index suivant.

2. Le dispositif de la revendication 1, dans lequel l'index (1112) est affiché sur l'afficheur sensible au toucher (1234) sans que ne soit également affichée une barre de défilement qui serait distincte de l'index (1112) .

3. Le dispositif de la revendication 1 ou 2, dans lequel des instructions pour l'affichage du sous-ensemble d'éléments d'information respectif (1116-1 à 1116-4) comprennent des instructions pour sauter au sous-ensemble d'éléments d'information respectif (1116-1 à 1116-4), si le point de contact correspond à l'élément d'index respectif (1114).

4. Le dispositif de la revendication 1 ou 2, dans lequel le symbole d'index correspondant (1114-3) reste adjacent à un premier élément affiché (1124) du sous-ensemble d'éléments d'information respectif.

5. Le dispositif de l'une des revendications 1 à 4, comprenant des instructions pour la détection d'un troisième point de contact avec l'afficheur sensible au toucher (1234) correspondant à une sélection par l'utilisateur d'un élément d'information respectif dans la liste d'éléments d'information (1118, 1120, 1234, 1126) et pour l'affichage sur l'afficheur sensible au toucher (1234) d'une information correspondant à l'élément d'information respectif.

6. Le dispositif de l'une des revendications 1 à 5, dans lequel le dispositif électronique (1200) est un dispositif portable qui permet de communiquer sans fil et de reproduire de la musique.

7. Un procédé implémenté par calculateur, comprenant :

sur un dispositif électronique (1200) avec un afficheur sensible au toucher (1234) :

l'affichage sur l'afficheur sensible au toucher (1234) d'un index (1112) qui inclut une séquence d'éléments d'index (1114), et d'une liste d'éléments d'information (1118, 1120, 1124, 1126) qui comprend une séquence de sous-ensembles d'éléments d'information (1116-1 à 1116-4) correspondant à la séquence d'éléments d'index (1114) ;
la détection d'un premier point de contact d'un utilisateur au-dessus de l'index (1112) affiché sur l'afficheur sensible au toucher (1234) ;
la détermination d'un élément d'index respectif (1114) qui correspond au premier point de contact et l'affichage d'un sous-ensemble d'éléments d'information respectif (1116-1 à 1116-4) qui correspond à l'élément d'index respectif (1114) ; et la détermination d'un balayage vers le haut d'un second point de contact de l'utilisateur au-dessus de la liste d'éléments d'information (1118, 1120, 1124, 1126) affichée sur l'afficheur sensible au toucher (1234) et le défilement de la liste d'éléments d'information (1118, 1120, 1124, 1126) sur l'afficheur sensible au toucher (1234) en réponse au balayage vers le haut ; et
l'affichage, pendant le défilement dans les sous-ensembles d'information respectifs (1116-1, 1116-2), en combinaison avec chaque sous-ensemble d'éléments d'information respectif (1116-1, 1116-2), d'un symbole d'index correspondant (1114-1, 1114-2), le symbole d'index correspondant (1114-1, 1114-2) se déplaçant sur l'afficheur sensible au toucher (1234) en fonction du sous-ensemble d'éléments d'information respectif (1116-1, 1116-2), le déplacement du symbole d'index correspondant (1114-3) sur l'afficheur sensible au toucher (1234) en fonction du sous-ensemble d'éléments d'information respectif comprenant : en réponse à un balayage vers le haut au-dessus de la liste d'éléments d'information sur l'afficheur sensible au toucher (1234), le déplacement d'un symbole d'index (1114-3) d'un bord inférieur d'une fenêtre (1110) à un bord supérieur de la fenêtre (1110) et le maintien de l'affichage du symbole d'index (1114-3) au bord supérieur de la fenêtre (1110) jusqu'à atteindre une fin d'un sous-ensemble d'éléments d'information correspondant, le symbole d'index étant alors remplacé par le symbole d'index suivant.

8. Le procédé implémenté par calculateur de la revendication 7, dans lequel l'index (1112) est affiché sur l'afficheur sensible au toucher (1234) sans que ne soit également affichée une barre de défilement qui serait distincte de l'index (1112).

9. Le procédé implémenté par calculateur de la revendication 7 ou 8, dans lequel l'affichage du sous-ensemble d'éléments d'information respectif (1116-1 à 1116-4) comprend le saut au sous-ensemble d'éléments d'information respectif (1116-1 à 1116-4) si le point de contact correspond à l'élément d'index respectif (1114).

10. Le procédé implémenté par calculateur de la revendication 7 ou 8, dans lequel le symbole d'index correspondant (1114-3) reste adjacent à un premier élément affiché (1124) du sous-ensemble d'éléments d'information respectif.

11. Le procédé implémenté par calculateur de l'une des revendications 7 à 10, comprenant la détection d'un troisième point de contact avec l'afficheur sensible au toucher (1234) correspondant à une sélection par l'utilisateur d'un élément d'information respectif dans la liste d'éléments d'information (1118, 1120, 1234, 1126) et l'affichage sur l'afficheur sensible au toucher (1234) d'une information correspondant à l'élément d'information respectif.

12. Le procédé implémenté par calculateur de l'une des revendications 7 à 11, dans lequel le dispositif électronique (1200) est un dispositif portable qui permet de communiquer sans fil et de reproduire de la musique.

13. Un produit de programme informatique avec des instructions configurées pour être exécutées par un ou plusieurs processeurs (1214), qui lorsqu'elles sont exécutées par un dispositif électronique (1200) avec un afficheur sensible au toucher (1234) font en sorte que le dispositif (1200) met en oeuvre le procédé de l'une des revendications 7 à 12.

```
                                    ┌─ 100

                                                              ┌─ 110
        ┌──────────────────────────────────────────┐
        │   Determine Movement of a Point of Contact  │
        │  Corresponding to a Sweeping Motion/Gesture by a │
        │       User of a Touch-Sensitive Display.    │
        └──────────────────────────────────────────┘

                                                              ┌─ 112
        ┌──────────────────────────────────────────┐
        │  Scroll Through a List of Items on the Touch-Sensitive │
        │      Display in Response to the Movement.   │
        └──────────────────────────────────────────┘

                                                              ┌─ 114
        ┌──────────────────────────────────────────┐
        │ Accelerate Scrolling in Response to a First Accelerated │
        │    Movement of the Point of Contact and Optional │
        │        Breaking of the Point of Contact.    │
        └──────────────────────────────────────────┘

                                                              ┌─ 116
        ┌──────────────────────────────────────────┐
        │   Further Accelerate Scrolling in Response to a Second │
        │    Accelerated Movement of the Point of Contact and │
        │       Optional Breaking of the Point of Contact. │
        └──────────────────────────────────────────┘

                                                              ┌─ 118
        ┌──────────────────────────────────────────┐
        │      Reverse a Direction of Scrolling in Response to │
        │          Scrolling Intersecting a Virtual Boundary │
        │       Corresponding to a Terminus of the List. │
        └──────────────────────────────────────────┘

                                                              ┌─ 120
        ┌──────────────────────────────────────────┐
        │  Stop Scrolling in Accordance With Breaking the Point │
        │  of Contact and Establishing a Substantially Stationary │
        │  Point of Contact for at Least a Pre-determined Period │
        │                    of Time.                 │
        └──────────────────────────────────────────┘
```

**Figure 1**

200

210

Determine Movement of a Point of Contact
Corresponding to a Sweeping Motion/Gesture by a
User of a Touch-Sensitive Display.

212

Scroll Through a List of Items on the Touch-Sensitive
Display in Response to the Movement.

214

Reverse a Direction of Scrolling in Response to
Scrolling Intersecting a Virtual Boundary
Corresponding to a Terminus of the List.

# Figure 2

300

**User**
**310**

**Device**
**312**

314

Move Point of Contact Using a
Sweep Motion/Gesture.

316

Determine Movement and/or
Acceleration of Point of Contact.

318 | Scroll Through a List of Items on a
Display in Response to the
Movement.

322

Move Point of Contact Again
Using a Sweep Motion/Gesture.

320 | Accelerate Scrolling in Response
to Accelerated Movement of the
Point of Contact and Optional
Breaking of the Point of Contact.

324 | Determine Movement and/or
Acceleration of Point of Contact.

326 | Further Accelerate Scrolling in
Response to Accelerated
Movement of the Point of Contact
and Optional Breaking of the Point
of Contact.

**Figure 3**

— 400

| User 310 | Device 312 |
|---|---|

— 314

Move Point of Contact Using a
Sweep Motion/Gesture.

— 316

Determine Movement and/or
Acceleration of Point of Contact.

318 Scroll Through a List of Items on a
Display in Response to the
Movement.

410

Break Point of Contact and
Establish a Substantially Stationary
Point of Contact for at Least a Pre-
determined Period of Time.

320 Accelerate Scrolling in Response
to Accelerated Movement of the
Point of Contact and Optional
Breaking of the Point of Contact.

324 Determine Breaking Point of
Contact and Establishment of a
Substantially Stationary Point of
Contact.

412 Stop Scrolling Through the List.

**Figure 4**

— 500

| User | Device |
|---|---|
| 310 | 312 |

—314

Move Point of Contact Using a
Sweep Motion/Gesture.

—316

Determine Movement and/or
Acceleration of Point of Contact.

318    Scroll Through a List of Items on a
Display in Response to the
Movement.

320    Accelerate Scrolling in Response
to Accelerated Movement of the
Point of Contact and Optional
Breaking of the Point of Contact
(Optional.)

510    Reverse a Direction of Scrolling in
Response to Scrolling Intersecting
a Virtual Boundary Corresponding
to a Terminus of the List.

**Figure 5**

GUI
Display
608

600

●●○○○

Information
612-1

Movement
614

Information
612-2

Information
612-3

616

Information
612-4

Window
610

menu

**Figure 6**

GUI
Display
608

600

●●○○○

Information
612-1

Velocity
710-1

Distance
712-1

Terminus
714

Window
610

menu

**Figure 7A**

GUI
Display
608

600

● ● ○ ○ ○

Information
612-1

Terminus
714

Window
610

menu

**Figure 7B**

GUI
Display
608

600

●●○○○

Velocity
710-2

Information
612-1

Distance
712-2

Terminus
714

Window
610

menu

**Figure 7C**

800

Determine Movement of a Point of Contact Over an Index Displayed on a Touch-Sensitive Display, the Displayed Index Having a Sequence of Index Items. — 810

Scroll Through a List of Items on the Touch-Sensitive Display in Response to the Movement, the List of Information Items Including a Sequence of Information Item Subsets Corresponding to the Sequence of Index Items. — 812

Determine a Scroll Speed Based on a Speed of Movement of the Point of Contact Over a Respective Index Item and a Number of Items in the Information Items Subset Corresponding to the Respective Index Item. — 814

Scroll Through all Items in a Plurality of the Information Item Subsets in Response to the Point of Contact Moving Over the Corresponding Index Items in the Displayed Index. — 816

Detect that the Point of Contact Corresponds to a Respective Index Item in the Displayed Index and, for a Respective Index Item in the Index, Scroll the List of Information Items to a Corresponding Subset of the List of Information Items. — 818

Display Respective Index Symbols Adjacent Corresponding Subsets of the List of Information Items While Scrolling Through the List of Information Items. — 820

Detect a Point of Contact With the Touch-Sensitive Display Corresponding to a Selection of a Respective Information Item in the List of Information Items, and Display on the Touch-Sensitive Display Information Corresponding to the Respective Information Item in Response to the Detecting. — 822

**Figure 8**

900

910

```
Determine Movement of a Point of Contact by a User of a Touch-
                    Sensitive Display.
```

912

```
Scroll Through a List of Information Items on the Touch-Sensitive
Display in Response to the Movement, the List of Information Items
Including a Sequence of Information Item Subsets Corresponding to
              a Sequence of Index Symbols.
```

914

```
Display the Index Symbol Corresponding to a Respective
Information Item Subset Translucently Over the Respective
         Information Item Subset (Optional).
```

916

```
Display the Index Symbol Corresponding to a Respective
Information Item Subset Using a Different Font Color Than Used to
Display Text in the Information Item Subset (Optional).
```

918

```
Display the Index Symbol Corresponding to a Respective
Information Item Subset Using a Larger Font Than Used to Display
Text in the Information Item Subset (Optional).
```

920

```
Display the Index Symbol Corresponding to a Respective
Information Item Subset Adjacent to the Displayed Text of the
Information Item Subset and/or at an Upper Edge of a Virtual
                 Region (Optional).
```

## Figure 9

1000

910

Determine Movement of a Point of Contact by a User of a Touch-Sensitive Display.

912

Scroll Through a List of Information Items on the Touch-Sensitive Display in Response to the Movement, the List of Information Items Including a Sequence of Information Item Subsets Corresponding to a Sequence of Index Symbols.

914

Display the Index Symbol Corresponding to a Respective Information Item Subset Translucently Over the Respective Information Item Subset (Optional).

1010

Skip the Display of a Respective Index Symbol When the List of Information Items Contains No Items for a Respective Index Symbol (Optional).

1012

Move the Displayed Index Symbol With the Information Corresponding to the Index Symbol During Scrolling (Optional).

920

Display the Index Symbol Corresponding to a Respective Information Item Subset Adjacent to the Displayed Text of the Information Item Subset and/or at an Upper Edge of a Virtual Region (Optional).

**Figure 10**

GUI
Display
608

600

Index
1112

Scroll
Speed
1122

Direction
Keys
1132

Back    Forward

| | Information |
|---|---|
| Adam | **1118-1** |

| | Information |
|---|---|
| Alan | **1118-2** |

| | Information |
|---|---|
| Ali | **1118-3** |

| | Information |
|---|---|
| Arnold | **1118-4** |

| | Information |
|---|---|
| Bob | **1120-1** |

| | Information |
|---|---|
| Bruce | **1120-2** |

Infor-
mation
Item
Subset
1116-1

Infor-
mation
Item
Subset
1116-2

A
B
C
D
E
F
G
H
I
J
K
L
M
N
O
⋮
Z

Index
Items/
Symbols
1114

Window
1110

menu

**Figure 11A**

GUI
Display
608

— 600

Direction
Keys
1132

Index
1112

Scroll
Speed
1122

Index
Item/
Symbol
1114-1

●●○○○

🔋

Back        Forward

Inform
ation
Item
Subset
1116-1

Adam    Information
        1118-1

Alan    Information
        1118-2

A
B
C
D
E
F
G
H
I
J
K
L
M
N
O
•
•
•
Z

A

Ali     Information
        1118-3

Arnold  Information
        1118-4

Index
Items/
Symbols
1114

Inform
ation
Item
Subset
1116-2

Bob     Information
        1120-1

B

Bruce   Information
        1120-2

Index
Item/
Symbol
1114-2

•
•
•

Window
1110

menu

**Figure 11B**

GUI
Display
608

600

Direction
Keys
1132

Index
1112

Index
Item/
Symbol
1114-3

Scroll
Speed
1122

Back    Forward

Earl    Information
1124-1

Edgar    Information
1124-2

Ed    Information
1124-3

Motion
1126

Eileen    Information
1124-4

Eric    Information
1124-5

Esther    Information
1124-6

A
B
C
D
E
F
G
H
I
J
K
L
M
N
O
•
•
•
Z

Index
Items/
Symbols
1114

Window
1110

menu

**Figure 11C**

GUI
Display
608

← 600

Direction
Keys
1132

Index
Item/
Symbol
1114-3

Index
1112

Scroll
Speed
1122

●●○○○

Back　　　Forward

E

| Earl | Information 1124-1 |

| Edgar | Information 1124-2 |

| Ed | Information 1124-3 |

| Eileen | Information 1124-4 |

| Eric | Information 1124-5 |

| Esther | Information 1124-6 |

⋮

A
B
C
D
E
F
G
H
I
J
K
L
M
N
O
●
●
●
Z

Index
Items/
Symbols
1114

Window
1110

menu

**Figure 11D**

**Figure 11E**

Memory
1210

| | |
|---|---|
| Operating System | ⟋ 1238 |
| Communication Module | ⟋ 1240 |
| Display Module | ⟋ 1242 |
| List of Items/Index | ⟋ 1244 |
| Physical Device/Equation of Motion Module | ⟋ 1246 |
| Contact/Motion Module | ⟋ 1248 |
| Graphics Module | ⟋ 1250 |
| GPS Module | ⟋ 1252 |

1200

Sensor
(Optional)
1254

Antenna
1220

Memory Controller
1212

Peripherals
Interface
1216

RF Circuitry
1218

Speaker
1224

Processor(s)
1214

Audio Circuitry
1222

Micro-phone
1226

I/O Subsystem
1228

Touch-Screen Controller
1230

Other Input Controller(s)
1232

Touch Screen
1234

Other Input /
Control Devices
1236

**Figure 12**

List of Items
Data Structure
1300

| Items | Address | Telephone Number(s) | Photograph (Optional) | |
|-------|---------|---------------------|----------------------|---|
| 1312 | 1314 | 1316 | 1318 | |
| Individual 1 | Address 1 | Telephone Number 1 | Photograph 1 | 1310-1 |
| Individual 2 | Address 2 | Telephone Number 2 | Photograph 2 | 1310-2 |
| ⋮ | ⋮ | ⋮ | ⋮ | |
| Individual N | Address N | Telephone Number N | Photograph N | 1310-3 |

**Figure 13**

**EP 1 958 048 B1**

**REFERENCES CITED IN THE DESCRIPTION**

**Patent documents cited in the description**

- US 20050210403 A1, Satanek
- US 20040100479 A1, Nakano
- US 5563996 A, Tchao
- US 5825355 A1, Palmer
- US 6323846 B, Westerman
- US 6570557 B, Westerman
- US 6677932 B, Westerman
- US 20020015024 A1